# FASCICULE DE BREVET EUROPEEN

(11) **EP 3 417 572 B1**
(45) Date de publication et mention de la délivrance du brevet: **19.10.2022**
(21) Numéro de dépôt: 17703169.7
(22) Date de dépôt: 08.02.2017
(51) Int. Cl.: H04L 12/40, H04L 67/12, H04L 43/12, H04L 43/028, H04B 7/185, H04L 41/0213

(54) **RÉSEAU DE COMMUNICATION**
KOMMUNIKATIONSNETZWERK
COMMUNICATIONS NETWORK

(30) Priorité: 19.02.2016 FR 1651381
(43) Date de publication de la demande: 26.12.2018
(73) Titulaire: Safran Electronics & Defense, 92100 Boulogne-Billancourt (FR)
(72) Inventeur: TOILLON, Patrice, 77550 77550 Moissy-Cramayel (FR); GUILLOT, François, 77550 Moissy-Cramayel (FR)
(74) Mandataire: Decorchemont, Audrey Véronique Christèle
(86) Numéro de dépôt international: PCT/EP2017/052784
(87) Numéro de publication internationale: WO 2017/140560

(56) Documents cités:
- EP-A1- 2 793 431
- US-A1- 2006 215 568
- IAN LAND AND JEFF ELLIOTT: "Architecting ARINC 664, Part 7 (AFDX) Solutions", APPLICATION NOTE: VIRTEX-4 AND VIRTEX-5 FPGAS, , no. version 1.0.1 22 mai 2009 (2009-05-22), pages 1-25, XP007918728, Extrait de l'Internet: URL:http://www.xilinx.com/support/document ation/application_notes/xapp1130.pdf

## Description

L'invention concerne un réseau de communication notamment un réseau de communication pour aéronef.

### ARRIERE PLAN TECHNOLOGIQUE DE L'INVENTION

Dans le domaine aéronautique, les réseaux de communication servent de support aux communications internes à l'avion, ces communications permettant principalement l'échange de données entre les différents éléments de l'avionique.

De tels réseaux de communication comportent des organes de calcul (calculateurs, processeurs... ) reliés à l'avionique et mis en communication avec des terminaux d'utilisateurs via des commutateurs pour assurer l'échange de données au sein d'un même organe de calcul ou entre un organe de calcul et un terminal d'utilisateur. A cet effet, les commutateurs sont configurés pour surveiller et répartir les trames de données des différents canaux logiques du réseau de communication concerné en s'aidant de tables de configuration, chaque table de configuration contenant les caractéristiques propres aux canaux logiques et aux ports de sortie et d'entrée d'un commutateur donné.

Pour assurer un suivi des trames de données de ce type de réseau de communication, un calculateur central est usuellement connecté aux différents commutateurs du réseau de communication via des ports spécifiques dédiés de ces commutateurs. Ce calculateur central est ainsi configuré pour surveiller les informations ou une partie des informations contenues dans les différents canaux logiques du réseau de communication.

Dès lors, ce type de réseau de communication présente une architecture relativement lourde en comportant notamment un nombre de raccordements élevé au niveau du calculateur central.

EP2793431A1 divulgue un serveur, qui commande les commutateurs et stocke les données surveillées. Le but du serveur est de centraliser le stockage des données.

### OBJET DE L'INVENTION

Un but de l'invention est de proposer un réseau de communication qui présente une architecture simplifiée.

### BREVE DESCRIPTION DE L'INVENTION

En vue de la réalisation de ce but, on propose un réseau de communication pour aéronef comportant au moins un premier organe de calcul et un premier commutateur qui est raccordé au premier organe de calcul pour assurer l'échange de données au sein du premier organe de calcul et/ou entre le premier organe de calcul et au moins un terminal d'utilisateur distant du premier organe de calcul et relié au premier commutateur.

Selon l'invention, le premier commutateur comporte des moyens d'observation locaux des canaux logiques de communication du premier commutateur et le premier organe de calcul comprend des moyens de commande desdits moyens d'observation.

Ainsi, grâce à la structuration particulière du réseau de communication, l'observation de canaux logiques et de leurs contenus dudit réseau de communication s'effectue de façon locale au niveau des différents commutateurs et des organes de calcul associés ce qui permet d'avoir un réseau de communication avec un nombre de connexions et de calculateurs réduit, la connexion entre le commutateur et l'organe de calcul associé étant de toute façon nécessaire pour assurer l'échange de données au sein de l'organe de calcul ou vers l'extérieur.

De plus, une telle architecture de réseau de communication permet d'observer le réseau de communication en opérationnel, c'est-à-dire au cours du fonctionnement du réseau de communication, tout en ne perturbant pas ou peu les canaux logiques observés et également les canaux logiques non observés.

### BREVE DESCRIPTION DES DESSINS

L'invention sera mieux comprise à la lumière de la description qui suit de modes de réalisation non limitatifs de l'invention en référence aux figures ci-jointes, parmi lesquelles :
- la figure 1 illustre schématiquement un réseau de communication pour aéronef selon un premier mode de réalisation de l'invention,
- la figure 2 illustre schématiquement un commutateur du réseau de communication illustré à la figure 1,
- la figure 3 illustre schématiquement un réseau de communication pour aéronef selon un deuxième mode de réalisation de l'invention,
- la figure 4 illustre schématiquement un commutateur du réseau de communication illustré à la figure 3.

### DESCRIPTION DETAILLEE DE L'INVENTION

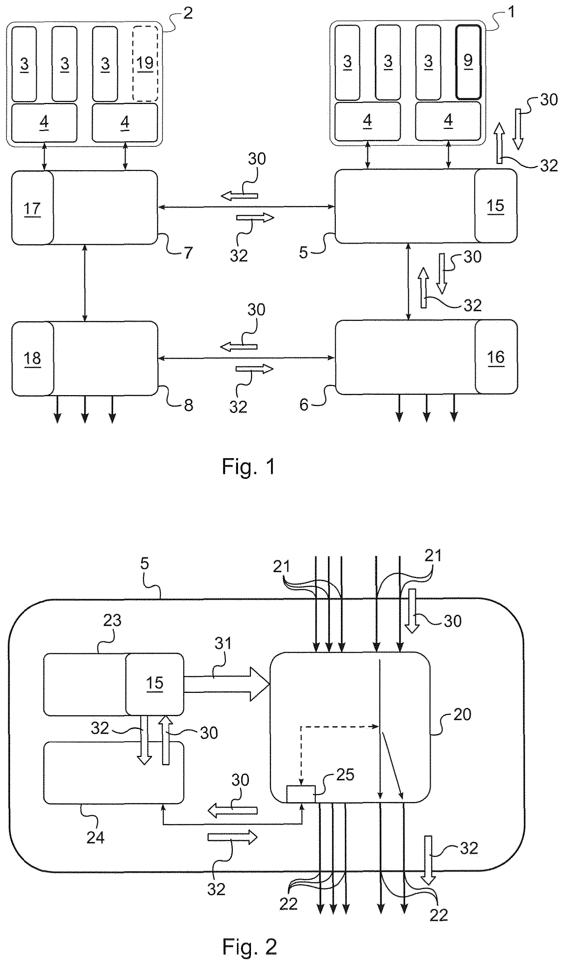

En référence à la figure 1, le réseau de communication selon le premier mode de réalisation de l'invention est un réseau de communication pour aéronef.

Le réseau de communication comporte ici un premier organe de calcul 1 et un deuxième organe de calcul 2, chacun associé à un élément avionique distinct de l'aéronef (éléments avioniques non représentés ici). Chaque organe de calcul 1, 2 est par exemple un calculateur ou encore un processeur ou un ensemble de calculateurs et/ou de processeurs. Chaque organe de calcul 1, 2 héberge de multiples applications-fonctions 3 avioniques à exécuter, applications-fonctions 3 propres pour une configuration donnée à l'élément avionique associé à l'organe de calcul considéré. Chaque organe de calcul 1, 2 comporte entre autres des unités de raccordement 4 associées chacune à une ou plusieurs applications-fonctions 3 de l'organe de calcul considéré. Les unités de raccordement 4 sont ici de type ARINC 664 P7 End System.

Le réseau de communication comporte également un premier commutateur 5 et un deuxième commutateur 6. Le premier commutateur 5 est raccordé d'une part au premier organe de calcul 1 et d'autre part au deuxième commutateur 6 pour contrôler les échanges de données entre les différentes parties du premier organe de calcul 1 et les échanges de données entre ledit premier organe de calcul 1 et le deuxième commutateur 6. Le deuxième commutateur 6 est quant à lui raccordé d'une part au premier commutateur 5 et d'autre part à des terminaux d'utilisateurs (non représentés ici) pour contrôler les échanges de données entre le premier commutateur 5 et les terminaux d'utilisateurs.

En outre, le réseau de communication comporte un troisième commutateur 7 et un quatrième commutateur 8. Le troisième commutateur 7 est raccordé d'une part au deuxième organe de calcul 2 et d'autre part au quatrième commutateur 8 pour contrôler les échanges de données entre les différentes parties du deuxième organe de calcul 2 et les échanges de données entre ledit deuxième organe de calcul 2 et le quatrième commutateur 8. Le quatrième commutateur 8 est quant à lui raccordé d'une part au troisième commutateur 7 et d'autre part aux terminaux d'utilisateurs pour contrôler les échanges de données entre le troisième commutateur 7 et les terminaux d'utilisateurs.

De préférence, le premier commutateur 5 et le troisième commutateur 7 sont également raccordés l'un à l'autre et le deuxième commutateur 6 et le quatrième commutateur 8 sont également raccordés l'un à l'autre.

Ceci permet de faciliter les échanges de données entre le premier organe de calcul 1 et le deuxième organe de calcul 2.

Le raccordement peut tout aussi bien être filaire ou non filaire entre les organes de calcul 1, 2, les commutateurs 5, 6, 7, 8 et les terminaux d'utilisateurs.

Le premier commutateur 5 va être à présent décrit en référence à la figure 2. Les trois autres commutateurs étant identiques au premier commutateur 5, cette description s'applique également au deuxième commutateur 6, au troisième commutateur 7 et au quatrième commutateur 8.

Le premier commutateur 5 comporte un routeur 20 permettant de relayer les trames de données entre un ou plusieurs ports d'entrée 21 du premier commutateur 5 et un ou plusieurs ports de sortie 22 du premier commutateur 5. Ce routeur 20 est par exemple de type Switch Engine.

Le premier commutateur 5 comporte également une unité de contrôle 23 du routeur 20 (tel qu'un calculateur ou un processeur) ainsi qu'une unité de raccordement 24 du routeur 20 à l'unité de contrôle 23. Un port interne 25 du routeur 20 est ainsi ici raccordé à l'unité de raccordement 24 pour la connexion du routeur 20 à l'unité de raccordement 24 qui est par ailleurs également raccordé à l'unité de contrôle 23. L'unité de raccordement 24 permet de recevoir, de filtrer et de fournir à l'unité de contrôle 23 des trames reçues via le port 25 (consignes, trame du canal logique à observer ...). L'unité de raccordement 24 ne permet pas de contrôler le routeur 20 mais de recevoir/émettre des trames de données.

L'unité de contrôle 23 comporte notamment au moins une table de configuration du premier commutateur 5, ladite table de configuration comprenant plusieurs descripteurs, chaque descripteur renfermant les caractéristiques liées à un canal logique du premier commutateur 5 ou les caractéristiques liées à un port de sortie 22 du premier commutateur 5 ou les caractéristiques liées à un port d'entrée 21 du premier commutateur 5.

L'unité de raccordement 24 est ici de type ARINC 664 P7 End System.

Selon l'invention, le premier commutateur 5 comporte des moyens d'observation locaux 15 des canaux logiques de communication du premier commutateur 5.

Les moyens d'observation locaux 15 sont ici agencés dans l'unité de contrôle 23 du premier commutateur 5. Les moyens d'observation locaux 15 sont configurés de sorte à extraire des données à surveiller à partir d'informations reçues par l'unité de contrôle 23 du routeur 20. Les moyens d'observation locaux 15 sont en outre configurés de sorte à envoyer les données extraites vers le routeur 20 qui est lui-même apte à transférer ces données dans le réseau de communication.

Le premier commutateur 5 est par exemple un commutateur dit A664 (c'est-à-dire reposant sur la norme ARINC 664) dont la structure initiale a été adaptée afin que le premier commutateur 5 puisse comporter les moyens d'observation locaux 15 dédiés précités.

En référence à la figure 1, les quatre commutateurs étant ici identiques, le premier commutateur 5 comporte donc les moyens d'observation locaux 15 précités des canaux logiques de communication du premier commutateur 5, le deuxième commutateur 6 comporte des deuxièmes moyens d'observation locaux 16 des canaux logiques de communication du deuxième commutateur 6, le troisième commutateur 7 comporte des troisièmes moyens d'observation locaux 17 des canaux logiques de communication du troisième commutateur 7 et le quatrième commutateur 8 comporte des quatrièmes moyens d'observation locaux 18 des canaux logiques de communication du quatrième commutateur 8.

Afin de contrôler ces moyens d'observation locaux, le premier organe de calcul 1 comporte des moyens de commande des premiers moyens d'observation locaux 15, des deuxièmes moyens d'observation locaux 16, des troisièmes moyens d'observation locaux 17 et des quatrièmes moyens d'observation locaux 18.

Dès lors, la surveillance peut être plus dynamique et plus globale puisque applicable à tous les commutateurs du réseau de communication.

De façon particulière, ces moyens de commande comportent une application-fonction particulière 9 à exécuter qui est propre aux différents moyens d'observation précités. Cette application-fonction particulière 9 est connectée à l'une des unités de raccordement 4 du premier organe de calcul 1. Cette unité de raccordement 4 est affectée seulement à cette application-fonction particulière 9 ou est associée à cette application-fonction particulière 9 et à une ou plusieurs autres applications-fonctions 3 du premier organe de calcul 1.

De préférence, pour la commande des différents moyens d'observation locaux et afin de ne pas augmenter le nombre de connexion dans le réseau de communication, les moyens de commande sont raccordés :
- directement aux premiers moyens d'observation locaux 15 via le routeur du premier commutateur 5,
- par l'intermédiaire du routeur du premier commutateur 5 et par l'intermédiaire du routeur du troisième commutateur 7 aux troisièmes moyens d'observation locaux 17,
- par l'intermédiaire du routeur du premier commutateur 5 et par l'intermédiaire du routeur du deuxième commutateur 6 aux deuxièmes moyens d'observation locaux 16,
- par l'intermédiaire du routeur du premier commutateur 5, par l'intermédiaire du routeur du deuxième commutateur 6 et par l'intermédiaire du routeur du quatrième commutateur 8 aux quatrièmes moyens d'observation locaux 18.

On tire ainsi avantageusement partie des connexions déjà existantes au sein du réseau de communication pour l'observation des différents canaux logiques.

De préférence, les moyens d'observation locaux 15, 16, 17, 18 et les moyens de commande associés sont agencés de sorte que la surveillance s'avère possible tout aussi bien au niveau d'un seul canal logique qu'au niveau de plusieurs canaux logiques à la fois.

De façon particulière, pour des questions de redondance, le deuxième organe de calcul 2 comporte également des moyens de commande 19 des premiers moyens d'observation locaux 15, des deuxièmes moyens d'observation locaux 16, des troisièmes moyens d'observation locaux 17 et des quatrièmes moyens d'observation locaux 18. Ces moyens de commande 19 sont par exemple identiques à ceux du premier organe de calcul 1.

Ainsi, en cas de défaillance du premier organe de calcul 1 et/ou de ses moyens de commande, les moyens de commande 19 du deuxième organe de calcul 2 peuvent assurer la surveillance des canaux logiques.

La surveillance d'un canal logique du réseau de communication va être à présent décrite en référence aux figures 1 et 2.

Les moyens de commande génèrent d'abord, via l'application-fonction particulière 9, une consigne de surveillance d'un canal logique donné. Cette consigne de surveillance comprend notamment une indication du canal logique à surveiller, une indication des moyens d'observation locaux du commutateur concerné par ce canal logique ainsi qu'une indication des données à récupérer à propos de ce canal logique. Par exemple dans l'en-tête de la trame supportant la consigne de surveillance sont codés d'une part l'identification du canal logique et d'autre part des informations IP, UDP ciblant explicitement les moyens d'observation locaux du commutateur concerné par ce canal logique afin que la consigne puisse atteindre le bon commutateur.

L'unité de raccordement 4 traduit alors cette consigne de surveillance dans un format adapté pour les commutateurs comme par exemple un format SNMP (Simple Network Management Protocol) ou TFTP (Trivial File Transfer Protocol) et la transmet aux commutateurs.

Au niveau d'un commutateur concerné par le canal logique à surveiller la consigne traduite 30 atteint le routeur 20 et est transmise aux moyens d'observation locaux par l'intermédiaire de l'unité de raccordement 24. On note que soit la consigne traduite 30 atteint directement le commutateur concerné (lorsque le commutateur concerné est donc le premier commutateur 5) soit la consigne traduite 30 est relayée par les différents commutateurs pour atteindre le ou les commutateurs concernés (lorsque le ou les commutateurs concernés sont donc parmi le deuxième commutateur 6, le troisième commutateur 7 ou le quatrième commutateur 8).

En fonction du nom ou de l'identification du canal logique à surveiller, les moyens d'observation locaux génèrent une consigne de sélection/désélection 31 à destination du routeur 20 afin d'associer le canal logique à surveiller au port interne 25 du routeur 20. Cette consigne de sélection/désélection 31 est directement fournie par les moyens d'observation locaux 15 au routeur 20 sans repasser par l'unité de raccordement 24 puisqu'il s'agit d'une commande locale.

A cet effet, on modifie un des paramètres du descripteur associé au canal logique à surveiller pour ajouter le port interne 25 dans un profil de diffusion dudit canal logique, profil de diffusion comprenant déjà les ports de sortie 22 du commutateur sur lesquels diffuser ledit canal logique et on modifie éventuellement un des paramètres d'un autre descripteur associé à un autre canal logique pour retirer le port interne 25 du profil de diffusion dudit autre canal logique.

En conséquence, via l'unité de raccordement 24, l'unité de contrôle 23 acquière des informations sur le canal logique à surveiller et les moyens d'observation locaux en extraient les données à récupérer d'après les indications de la consigne traduite 30.

Puis, un signal de réponse 32 contenant les données extraites est transmis au routeur 20 via l'unité de raccordement 24 et émis sur l'un ou plusieurs des ports de sortie 22 du commutateur concerné à destination du premier organe de calcul 1.

L'unité de raccordement 4 du premier organe de calcul 1 réceptionne ce signal de réponse 32, le traduit et le transmet aux moyens de commande.

On permet ainsi la surveillance d'un canal logique du réseau de communication directement au niveau des commutateurs.

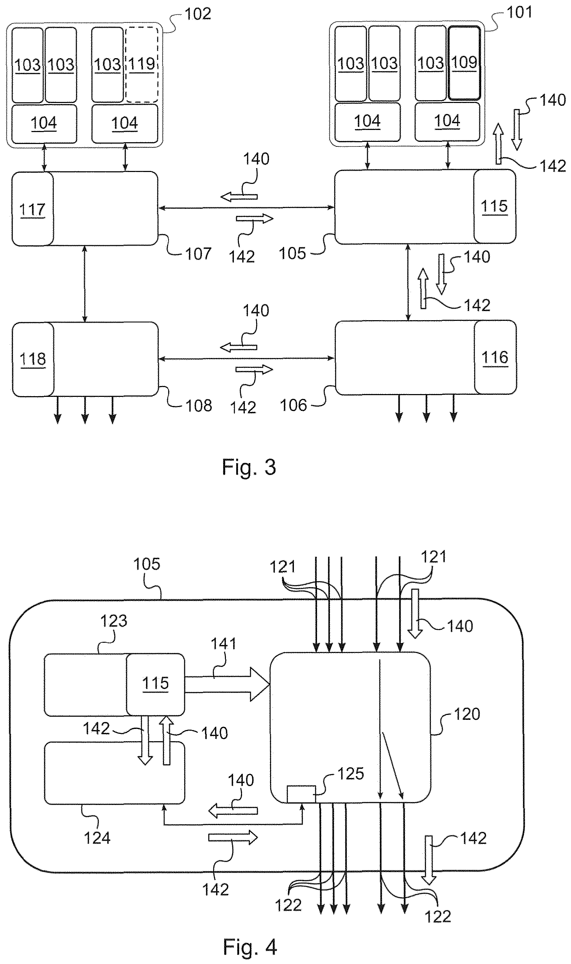

Un deuxième mode de réalisation va être à présent décrit en référence aux figures 3 et 4.

Dans ce deuxième mode de réalisation, la structure générale du réseau de communication et des différents éléments du réseau de communication (notamment commutateurs et organes de calcul) est identique à celle du premier mode de réalisation. Toutefois, les moyens d'observation locaux et les moyens de commande associés sont ici agencés de sorte à pouvoir modifier les configurations des canaux logiques associés aux différents commutateurs au lieu d'être agencés pour réaliser une simple surveillance desdits canaux logiques comme dans le premier mode de réalisation. On note que cette reconfiguration est distincte de la simple sélection/désélection d'un port interne du routeur dans un profil de diffusion d'un descripteur associé audit routeur pour la surveillance d'un canal logique. La reconfiguration s'attache en effet à modifier la configuration d'un ou plusieurs canaux logiques de sorte que ce changement de configuration ait une répercussion sur l'extérieur du commutateur concerné par ce ou ces canaux logiques.

De préférence, les moyens d'observation locaux et les moyens de commande associés sont agencés de sorte qu'une modification de configuration d'un canal logique puisse concerner tout à la fois la modification d'un ou plusieurs paramètres du canal logique et/ou l'ajout ou le retrait du canal logique au réseau de communication (étant entendu que cet ajout ou ce retrait est purement fictif et consiste à utiliser ou ne plus utiliser de façon temporaire ce canal logique pour les communications).

De préférence, les moyens d'observation locaux et les moyens de commande associés sont agencés de sorte que la reconfiguration est possible au niveau de plusieurs canaux logiques à la fois et au niveau d'un seul canal logique à la fois.

De façon particulière, les moyens d'observation locaux et les moyens de commande associés sont agencés de sorte à pouvoir non seulement reconfigurer les canaux logiques des différents commutateurs mais également à pouvoir reconfigurer les ports d'entrée et/ou de sortie des différents commutateurs.

Ceci permet d'autoriser plus facilement une reconfiguration des emplacements des fonctions-applications 104 du premier organe de calcul 101 et du deuxième organe de calcul 102 et/ou des états actifs/passifs des différentes fonctions-applications 104 et ce même en opérationnel.

La reconfiguration d'un canal logique du réseau de communication va être à présent décrite en référence aux figures 3 et 4.

Les moyens de commande génèrent d'abord, via l'application-fonction particulière 109, une consigne de reconfiguration d'un canal logique donné. Cette consigne de reconfiguration comprend notamment une indication du canal logique à reconfigurer, une indication des moyens d'observation locaux du commutateur concerné par ce canal logique ainsi qu'une indication de la reconfiguration à effectuer sur ce canal logique : soit une identification de la configuration cible à atteindre sur ce canal logique soit une identification d'un écart de configuration à appliquer sur ce canal logique, ainsi qu'une indication des données à récupérer à propos de ce canal logique. Par exemple dans l'en-tête de la trame supportant la consigne de reconfiguration sont codées d'une part l'identification du canal logique et d'autre part des informations IP, UDP ciblant explicitement les moyens d'observation locaux du commutateur concerné par ce canal logique afin que la consigne puisse atteindre le bon commutateur.

L'unité de raccordement 104 traduit alors cette consigne de reconfiguration dans un format adapté pour les commutateurs comme par exemple un format SNMP (Simple Network Management Protocol) ou TFTP (Trivial File Transfer Protocol) et la transmet aux commutateurs.

Au niveau d'un commutateur concerné par le canal logique à reconfigurer, la consigne traduite 140 atteint le routeur 120 et est transmise aux moyens d'observation locaux par l'intermédiaire de l'unité de raccordement 124.

Si la consigne traduite 140 comporte une indication d'une configuration cible à atteindre, alors les moyens d'observation locaux déterminent l'écart type avec la configuration actuelle et la configuration cible à atteindre et génèrent une consigne de modification du canal logique 141 concerné à destination du routeur 120 pour appliquer cet écart au ou aux descripteurs de ce canal logique. Cette consigne de modification du canal logique 141 est directement fournie par les moyens d'observation locaux 115 au routeur 120 sans repasser par l'unité de raccordement 124 puisqu'il s'agit d'une commande locale.

Si la consigne traduite 140 comprend une identification d'un écart de configuration à appliquer sur le canal logique, alors les moyens d'observation locaux génèrent directement une consigne de modification du canal logique 141 concerné à destination du routeur 120 pour appliquer cet écart au ou aux descripteurs de ce canal logique.

Lorsque la consigne de modification du canal logique 141 comporte une information de changement de paramètres, la consigne de modification du canal logique 141 provoque une modification des paramètres concernés dans le ou les descripteurs du canal logique à reconfigurer. Lorsque la consigne de modification du canal logique 141 comporte une information de l'ajout ou le retrait du canal logique à reconfigurer, la consigne de modification du canal logique 141 provoque une modification de l'état (actif ou inactif) du ou des descripteurs du canal logique à reconfigurer.

En conséquence, il y a modification du canal logique à reconfigurer. En outre, un signal de réponse 142 contenant une information sur la configuration actuelle du canal logique à reconfigurer est généré par les moyens d'observations locaux et émis sur l'un ou plusieurs des ports de sortie 122 du commutateur concerné à destination du premier organe de calcul 101.

L'unité de raccordement 104 du premier organe de calcul 101 réceptionne ce signal de réponse, le traduit et le transmet aux moyens de commande.

De préférence, les moyens de commande et les moyens d'observation locaux sont configurés de sorte que la consigne de reconfiguration est émise de manière cyclique par les moyens de commande et de sorte que le signal de réponse 142 soit émis de manière cyclique par les moyens d'observation locaux.

On permet ainsi la reconfiguration d'un canal logique du réseau de communication directement au niveau des commutateurs.

L'invention n'est pas limitée à ce qui vient d'être décrit, mais bien au contraire englobe toute variante entrant dans le cadre défini par les revendications.

En particulier, le réseau de communication pourra comporter un nombre différent d'organes de calcul.

Pour des questions de redondance, chaque commutateur du réseau de communication pourra comporter un autre commutateur en parallèle ou plusieurs autres commutateurs en parallèle.

Bien qu'ici les moyens d'observation locaux et les moyens de commande associés sont agencés de sorte à pouvoir seulement surveiller les canaux logiques ou sont agencés de sorte à pouvoir seulement reconfigurer les canaux logiques, les moyens d'observation locaux et les moyens de commande associés pourront être agencés de sorte à pouvoir non seulement surveiller les canaux logiques mais également à reconfigurer les canaux logiques.

Bien qu'ici tous les commutateurs du réseau de communication comportent des moyens d'observation locaux, un seul commutateur ou une partie des commutateurs pourront comporter des moyens d'observation locaux. En outre, au sein d'un même réseau de communication, les commutateurs pourront avoir des moyens d'observation locaux différents d'un commutateur à l'autre (par exemple une partie comprendra des moyens d'observation permettant seulement une surveillance des canaux logiques et une autre partie comprendra des moyens d'observation permettant seulement une reconfiguration des canaux logiques).

## Revendications

1. Réseau de communication pour aéronef comportant au moins un premier organe de calcul (1) et un premier commutateur (5) qui est raccordé au premier organe de calcul pour assurer l'échange de données au sein du premier organe de calcul et/ou entre le premier organe de calcul et au moins un terminal d'utilisateur distant du premier organe de calcul et relié au premier commutateur, le premier commutateur comportant Le des moyens d'observation locaux (15) du contenu des informations transitant par des canaux logiques de communication du premier commutateur et le premier organe de calcul comportant des moyens de commande desdits moyens d'observation, le réseau de communication étant **caractérisé en ce que** le réseau de communication comporte au moins un deuxième organe de calcul (2) et un deuxième commutateur (7) qui est raccordé au deuxième organe de calcul pour assurer l'échange de données au sein du deuxième organe de calcul et/ou entre le deuxième organe de calcul et au moins un terminal d'utilisateur distant du deuxième organe de calcul et relié au deuxième commutateur, le deuxième commutateur comportant des moyens d'observation locaux (16) du contenu des informations transitant par des canaux logiques de communication du deuxième commutateur, chaque organe de calcul étant associé à un élément avionique distinct de l'aéronef et hébergeant ainsi de multiples applications-fonctions avioniques à exécuter, applications-fonctions propres pour une configuration donnée à l'élément avionique associé à l'organe de calcul considéré.

2. Réseau de communication selon la revendication 1, dans lequel les moyens de commande du premier organe de calcul (1) sont configurés de sorte à commander également les moyens d'observations locaux (16) du deuxième commutateur (6).

3. Réseau de communication selon la revendication 2, dans lequel les moyens de commande du premier organe de calcul (1) sont agencés de sorte à être raccordé directement au premier commutateur (5) et à être raccordé via le premier commutateur au deuxième commutateur (6).

4. Réseau de communication selon la revendication 1, dans lequel le premier commutateur (5) et le deuxième commutateur (7) sont raccordés l'un à l'autre.

5. Réseau de communication selon la revendication 1, dans lequel le premier commutateur (5) comporte un routeur (20) pour relayer des trames de données entre un ou plusieurs ports d'entrée (21) du premier commutateur et un ou plusieurs ports de sortie (22) du premier commutateur, une unité de contrôle (23) du routeur ainsi qu'une unité de raccordement (24) du routeur à l'unité de contrôle, un port interne (25) du routeur étant raccordé à l'unité de raccordement.

6. Réseau de communication selon la revendication 5, dans lequel les moyens d'observation locaux (15) sont agencés dans l'unité de contrôle (23) du premier commutateur (5).

7. Réseau de communication selon la revendication 1, dans lequel les moyens d'observation locaux (15) et les moyens de commande sont agencés de sorte à pouvoir surveiller le contenu des informations transitant par des canaux logiques de communication circulant sur le premier commutateur (5).

8. Réseau de communication selon la revendication 6, dans lequel les moyens d'observation locaux (15) et les moyens de commande associés sont agencés de sorte à pouvoir surveiller à la fois tout aussi bien le contenu des informations transitant par un seul canal logique que le contenu des informations transitant par plusieurs canaux logiques.

9. Réseau de communication selon la revendication 1, dans lequel les moyens d'observation locaux (15) et les moyens de commande sont agencés de sorte à pouvoir reconfigurer des canaux logiques de communication circulant sur le premier commutateur (5).

10. Réseau de communication selon la revendication 9, dans lequel les moyens d'observation locaux (15) et les moyens de commande associés sont agencés de sorte à pouvoir reconfigurer tout aussi un seul canal logique à la fois que plusieurs canaux logiques à la fois.

11. Réseau de communication selon la revendication 9, dans lequel les moyens d'observation locaux (15) et les moyens de commande associés sont agencés de sorte qu'une modification de configuration d'un canal logique puisse concerner tout à la fois la modification d'un ou plusieurs paramètres du canal logique et/ou l'ajout ou le retrait du canal logique au réseau de communication.

12. Réseau de communication selon la revendication 9, dans lequel les moyens d'observation locaux (15) et les moyens de commande sont agencés de sorte à pouvoir reconfigurer également des ports d'entrée (21) et/ou de sortie (22) du premier commutateur (5).

## Patentansprüche

1. Kommunikationsnetzwerk für ein Luftfahrzeug, umfassend mindestens ein erstes Rechenorgan (1) und einen ersten Schalter (5), der an das erste Rechenorgan angeschlossen ist, um den Datenaustausch im Inneren des ersten Rechenorgans und/oder zwischen dem ersten Rechenorgan und mindestens einem vom ersten Rechenorgan entfernten Benutzerterminal sicherzustellen, der mit dem ersten Schalter verbunden ist, wobei der erste Schalter lokale Beobachtungsmittel (15) zum Beobachten des Inhalts der Informationen umfasst, die durch logische Kommunikationskanäle des ersten Schalters fließen, und wobei das erste Rechenorgan Steuermittel zum Steuern der genannten Beobachtungsmittel umfasst, wobei das Kommunikationsnetzwerk **dadurch gekennzeichnet ist, dass** das Kommunikationsnetzwerk mindestens ein zweites Rechenorgan (2) und einen zweiten Schalter (7) umfasst, der an das zweite Rechenorgan angeschlossen ist, um den Datenaustausch im Inneren des zweiten Rechenorgans und/oder zwischen dem zweiten Rechenorgan und mindestens einem von dem zweiten Rechenorgan entfernten Benutzerterminal sicherzustellen, der mit dem zweiten Schalter verbunden ist, wobei der zweite Schalter lokale Beobachtungsmittel (16) zum Beobachten des Inhalts der Informationen umfasst, die durch logische Kommunikationskanäle des zweiten Schalters fließen, wobei jedes Rechenorgan einem separaten Avionikelement des Luftfahrzeugs zugeordnet ist und somit mehrere auszuführende Avionik-Anwendungsfunktionen beherbergt, Anwendungsfunktionen, die für eine gegebene Konfiguration dem Avionikelement zu eigen sind, das dem betreffenden Rechenorgan zugeordnet ist.

2. Kommunikationsnetzwerk nach Anspruch 1, bei dem die Steuermittel zum Steuern des ersten Rechenorgans (1) so konfiguriert sind, dass sie ebenfalls die lokalen Beobachtungsmittel (16) des zweiten Schalters (6) steuern.

3. Kommunikationsnetzwerk nach Anspruch 2, bei dem die Steuermittel zum Steuern des ersten Rechenorgans (1) so ausgebildet sind, dass sie direkt an den ersten Schalter (5) angeschlossen sind und über den ersten Schalter an den zweiten Schalter (6) angeschlossen sind.

4. Kommunikationsnetzwerk nach Anspruch 1, bei dem der erste Schalter (5) und der zweite Schalter (7) aneinander angeschlossen sind.

5. Kommunikationsnetzwerk nach Anspruch 1, bei dem der erste Schalter (5) einen Router (20) umfasst, um Datenrahmen zwischen einem oder mehreren Eingangsports (21) des ersten Schalters und einem oder mehreren Ausgangsports (22) des ersten Schalters zu übertragen, eine Kontrolleinheit (23) zur Kontrolle des Routers sowie eine Anschlusseinheit (24) zum Anschluss des Routers an die Kontrolleinheit, wobei ein innerer Port (25) des Routers an die Anschlusseinheit angeschlossen ist.

6. Kommunikationsnetzwerk nach Anspruch 5, bei dem die lokalen Beobachtungsmittel (15) in der Kontrolleinheit (23) des ersten Schalters (5) ausgebildet sind.

7. Kommunikationsnetzwerk nach Anspruch 1, bei dem die lokalen Beobachtungsmittel (15) und die Steuermittel so ausgebildet sind, dass sie den Inhalt der Informationen, die durch logische Kommunikationskanäle fließen, die auf dem ersten Schalter (5) zirkulieren, überwachen können.

8. Kommunikationsnetzwerk nach Anspruch 6, bei dem die lokalen Beobachtungsmittel (15) und die dazugehörigen Steuermittel so ausgebildet sind, dass sie gleichzeitig genauso gut den Inhalt der Informationen überwachen können, die über einen einzigen logischen Kanal fließen, wie den Inhalt der Informationen, die über mehrere logische Kanäle fließen.

9. Kommunikationsnetzwerk nach Anspruch 1, bei dem die lokalen Beobachtungsmittel (15) und die Steuermittel so ausgebildet sind, dass sie logische Kommunikationskanäle, die auf dem ersten Schalter (5) zirkulieren, rekonfigurieren können.

10. Kommunikationsnetzwerk nach Anspruch 9, bei dem die lokalen Beobachtungsmittel (15) und die dazugehörigen Steuermittel so ausgebildet sind, dass sie genauso gut einen einzigen logischen Kanal zu einem Zeitpunkt wie mehrere logische Kanäle zu einem Zeitpunkt rekonfigurieren können.

11. Kommunikationsnetzwerk nach Anspruch 9, bei dem die lokalen Beobachtungsmittel (15) und die dazugehörigen Steuermittel so ausgebildet sind, dass eine Konfigurationsmodifikation eines logischen Kanals gleichzeitig die Modifikation eines oder mehrerer Parameter des logischen Kanals und/oder das Hinzufügen oder das Entfernern des logischen Kanals zu/von dem Kommunikationsnetzwerk betreffen kann.

12. Kommunikationsnetzwerk nach Anspruch 9, bei dem die lokalen Beobachtungsmittel (15) und die Steuermittel so ausgebildet sind, dass sie ebenfalls Eingangsports (21) und/oder Ausgangsports (22) des ersten Schalters (5) rekonfigurieren können.

## Claims

1. A communication network for an aircraft comprising at least one first processing member (1) and a first switch (5) which is connected to the first processing member in order to provide data exchange within the first processing member and/or between the first processing member and at least one user terminal remote from the first processing member and connected to the first switch, with the communication network being **characterized in that** the first switch comprises local means (15) for observing the content of information transmitted via logical communication channels of the first switch and **in that** the first processing member comprises means for controlling said observation means, the communication network comprising at least one second processing member (2) and a second switch (6) which is connected to the second processing member in order to provide data exchange within the second processing member and/or between the second processing member and at least one user terminal remote from the second processing member and connected to the second switch, with the second switch including local means (16) for observing the content of information transmitted via the logical communication channels of the second switch, wherein each processing member being associated with a separate avionics element of the aircraft and thus hosting multiple avionics applications-functions to be executed, such applications-functions being specific to a configuration given to the avionics element associated with the processing member concerned.

2. A communication network according to claim 1, wherein the means for controlling the first processing member (1) are so configured as to also control the local observation means (16) of the second switch (6).

3. A communication network according to claim 2, wherein the means for controlling the first processing member (1) are so arranged as to be directly connected to the first switch (5) and to be connected to the second switch (6) via the first switch.

4. A communication network according to claim 1, wherein the first switch (5) and the second switch (6) are connected to each other.

5. A communication network according to claim 1, wherein the first switch (5) comprises a router (20) for relaying data frames between one or more input port(s) (21) of the first switch and one or more output port(s) (22) of the first switch, a unit (23) for controlling the router and a unit (24) for connecting the router to the control unit, with an internal port (25) of the router being connected to the connection unit.

6. A communication network according to claim 5, wherein the local observation means (15) are arranged in the control unit (23) of the first switch (5).

7. A communication network according to claim 1, wherein the local observation means (15) and the control means are so arranged as to be able to monitor the content of the information transmitted via logical communication channels circulating on the first switch (5).

8. A communication network according to claim 6, wherein the local observation means (15) and the associated control means are so arranged as to be able to equally monitor both the content of the information transmitted via one single logical channel and the content of the information transmitted via several logical channels.

9. A communication network according to claim 1, wherein the local observation means (15) and the control means are so arranged as to be able to reconfigure logical communication channels circulating on the first switch (5).

10. A communication network according to claim 9, wherein the local observation means (15) and the associated control means are so arranged as to be able to equally reconfigure one single logical channel at a time and several logical channels at a time.

11. A communication network according to claim 9, wherein the local observation means (15) and the associated control means are so arranged that a configuration change of a logical channel can relate at the same time to the modification of one or more parameter (s) of the logical channel and/or the addition or the removal of the logical channel to/from the communication network.

12. A communication network according to claim 9, wherein the local observation means (15) and the control means are so arranged as to be able to also reconfigure input ports (21) and/or output ports (22) of the first switch (5).
